# EUROPÄISCHE PATENTSCHRIFT

(11) **EP 2 811 122 B1**
(45) Veröffentlichungstag und Bekanntmachung des Hinweises auf die Patenterteilung: **30.08.2017**
(21) Anmeldenummer: 14168381.3
(22) Anmeldetag: 15.05.2014
(51) Int. Cl.: F01D 25/24, F01D 21/04

(54) **Turbinengehäuse mit Verstärkungselementen im Containmentbereich**
Turbine housing with reinforcing elements in the containment area
Boîtier de turbine doté d'éléments de renforcement dans une zone de confinement

(30) Priorität: 07.06.2013 DE 102013210602
(43) Veröffentlichungstag der Anmeldung: 10.12.2014
(73) Patentinhaber: MTU Aero Engines AG, 80995 München (DE)
(72) Erfinder: Feldmann, Manfred, 82223 Eichenau (DE); Sasse, Stefan, 85238 Petershausen (DE)

(56) Entgegenhaltungen:
- EP-A2- 1 001 140
- EP-A2- 1 503 043
- WO-A1-2013/095210
- US-A- 6 059 523
- US-B1- 7 334 984

## Beschreibung

Die vorliegende Erfindung betrifft ein Turbinengehäuse für eine Gasturbine mit einem Gehäuseabschnitt gemäß dem Oberbegriff des Anspruchs 1, wie es beispielsweise aus der US 7 334 984 B1 gemäß der Figur 4 dort bekannt ist. Der Vollständigkeit halber sei zudem auch noch auf die nachveröffentlichte WO 2013/095210 A1 und die EP 1 503 043 A2 hingewiesen.

Turbinengehäuse für Gasturbinen sollen unter anderem sicherstellen, dass bei einem mechanischen Bruch oder Teilabriss einer Laufschaufel die jeweiligen Bruchstücke das Turbinengehäuse nicht verlassen können. Mittels des Turbinengehäuses soll somit sichergestellt werden, dass diese Bruchstücke beispielsweise die Tragflächen oder den Rumpf des Flugzeugs nicht beschädigen.

Um dies sicherzustellen, wurde im Rahmen von Sicherheitsvorschriften unter anderem die sogenannte Sicherheitsbehälter- bzw. Containment-Forderung erstellt. Sie bedeutet, dass alle Bruchstücke einer Turbinenschaufel in dem Turbinengehäuse zurückgehalten werden müssen, gerade um zu verhindern, dass die Bruchstücke andere Teile des Flugzeugs beschädigen.

Eine Aufgabe der vorliegenden Erfindung ist es, ein Turbinengehäuse für eine Gasturbine mit einem Containment-Abschnitt vorzuschlagen.

Die erfindungsgemäße Aufgabe wird durch ein Turbinengehäuse mit den Merkmalen des Anspruchs 1 gelöst.

Erfindungsgemäß wird somit ein Turbinengehäuses für eine Gasturbine vorgeschlagen, welches einen Gehäuseabschnitt, insbesondere einen Niederdruckturbinen-Gehäuseabschnitt, im Folgenden als NDT-Gehäuseabschnitt abgekürzt, aufweist. Der NDT-Gehäuseabschnitt ist jener Gehäuseteil oder Gehäuseabschnitt, welcher den Bereich oder Abschnitt der Turbine mit dem Niederdruckbereich gegenüber einem Äußeren der Turbine abdeckt oder umschließt.

Der Gehäuseabschnitt weist einen Containment-Abschnitt auf. Der Gehäuseabschnitt kann mehr als einen Containment-Abschnitt aufweisen oder umfassen. Der Containment-Abschnitt kann als Containment bezeichnet werden. Der Containment-Abschnitt hat die Funktion, radial (das heißt, in Richtung der Fliehkraft) herausdringende Schaufelteile zurückzuhalten, welche sich im Schadensfall von den Laufschaufeln lösen können. Schaufelteile, die sich im Schadensfall von den Laufschaufeln lösen, können als Schaufeltrümmer bezeichnet werden.

Der Gehäuseabschnitt des erfindungsgemäßen Turbinengehäuses weist ein erstes Verstärkungselement auf, wobei das erste Verstärkungselement in flächiger Berührung mit der in Radialrichtung gesehen (im Folgenden wird "in Radialrichtung gesehen" abgekürzt als "radial") inneren und/oder radial äußeren Oberfläche des Gehäuseabschnitts verbunden ist. Der Gehäuseabschnitt kann weitere Verstärkungselemente aufweisen oder umfassen.

Bei allen vorstehenden und folgenden Ausführungen ist der Gebrauch des Ausdrucks "kann sein" bzw. "kann haben" usw. synonym zu "ist vorzugsweise" bzw. "hat vorzugsweise" usw. zu verstehen und soll erfindungsgemäße Ausführungsformen erläutern.

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann daher beispielsweise bei der Angabe "ein" oder "einem" stets "wenigstens ein" oder "wenigstens einem" mit. Dieses Verständnis ist ebenso von der vorliegenden Erfindung mit umfasst wie die Auslegung, dass ein Zahlenwort wie beispielsweise "ein" alternativ als "genau ein" gemeint sein kann, wo immer dies für den Fachmann erkennbar technisch möglich ist. Beides ist von der vorliegenden Erfindung umfasst und gilt für alle hierin verwendeten Zahlenworte.

Vorteilhafte Weiterentwicklungen der vorliegenden Erfindung sind jeweils Gegenstand von Unteransprüchen und Ausführungsformen.

Erfindungsgemäße Ausführungsformen können eines oder mehrere der im Folgenden genannten Merkmale aufweisen.

Der Begriff "Containment", wie er hierin verwendet wird, bezeichnet einen Sicherheitsbehälter, welcher hier auf dem Gebiet von Gasturbinen, insbesondere in der Luftfahrt, verwendet wird. Der Begriff wird im Rahmen von Sicherheitsvorschriften verwendet. Ein Containment soll sicherstellen, dass alle Bruchstücke, beispielsweise wenn sich aus irgendeinem Grund eine Turbinenschaufel oder ein Teil von ihr von dem Rotor einer Turbine löst, in dem Gehäuse, genauer in dem Turbinengehäuse, zurückgehalten werden. Dies wird auch als sogenannte "Containment-Forderung" bezeichnet. Aus der Containment-Forderung kann sich beispielsweise ergeben, dass die Wand des Gehäuses so bemessen sein muss, dass die beschriebene Anforderung erfüllt wird. Das Turbinengehäuse umschließt dabei den Rotor, um somit unter anderem zu verhindern, dass die Bruchstücke andere Teile beschädigen oder zu einem Folgeschaden führen. Beispielsweise kann das Flugzeug selbst beschädigt werden, etwa die Tragflügel oder der Flugzeugrumpf, oder Bruchstücke, die auf die Start- oder Landebahn gelangen, können nachfolgende Flugzeuge beschädigen.

Ein Containment kann einen oder mehrere Containment-Abschnitte aufweisen.

Erfindungsgemäß wird das Turbinengehäuse, insbesondere im NDT-Gehäusebereich, in mehrschaliger Bauweise oder mehrschichtig ausgeführt. Mit dieser Bauweise kann die Gesamtwanddicke des Gehäusebereichs verringert und damit vorteilhaft das Gewicht reduziert werden, bei gleichzeitiger Erfüllung der Containment-Forderung. Anders ausgedrückt wird der Gehäusebereich als Containment-Bereich in mehrschalige Bauweise ausgeführt. Anstatt in mehrschalige Bauweise (z. B. Vollschalen in Umfangsrichtung) können auch mehrteilige (z. B. mehrteilig in x-Achsrichtung bzw. Rotationsachsrichtung) Containment-Ringe für den NDT-Gehäusebereich verwendet werden.

Der Begriff "Zurückhalten von radial herausdringenden Schaufelteilen oder Schaufeltrümmern", wie er hierin verwendet wird, bezeichnet das Zurückhalten dieser Teile innerhalb des erfindungsgemäßen Turbinengehäuses. Durch das Zurückhalten können möglicherweise radial herausdringende Schaufelteile oder Schaufeltrümmer daran gehindert werden, das erfindungsgemäße Turbinengehäuse zu verlassen.

In manchen erfindungsgemäßen Ausführungsformen umfasst die Gasturbine unter anderem alle Schaufeln, insbesondere Laufschaufeln, welche in der Niederdruckturbine angeordnet sind. Der Niederdruckturbinen-Abschnitt kann jedoch auch nur eine oder einzelne Laufschaufeln, beispielsweise ohne die Leitschaufeln, umfassen.

Der Begriff "Oberfläche des Gehäuseabschnitts", wie er hierin verwendet wird, bezeichnet in manchen erfindungsgemäßen Ausführungsformen jede Fläche des Gehäuseabschnitts, die zum Verbinden mit einem Verstärkungselement geeignet und/oder vorgesehen ist. Eine Oberfläche kann im montierten oder teilmontierten Zustand des Gehäuseabschnitts zugänglich sein. Die Oberfläche kann beispielsweise eine Hinterschneidung sein oder erst nach einer Demontage weiterer Anbauteile oder Abschnitte des Gehäuseabschnitts zugänglich sein.

Eine radial innere Oberfläche ist in einigen erfindungsgemäßen Ausführungsformen eine Oberfläche, die sich innerhalb des Gehäuseabschnitts befindet und sich somit von der Mittelachse oder Drehachse der Turbine aus gesehen im radial inneren Bereich des Gehäuseabschnitts befindet. Als eine radial äußere Oberfläche kann folglich eine Oberfläche bezeichnet werden, die sich außen an dem Gehäuseabschnitt befindet.

Gemäß der vorliegenden Erfindung ist wenigstens ein zweites Verstärkungselement flächig mit dem ersten Verstärkungselement verbunden. Die beiden Verstärkungselemente können vollständig oder teilweise, zum Beispiel überlappend, miteinander verbunden sein. Das erste Verstärkungselement kann das radial weiter innen liegende Verstärkungselement sein, das zweite Verstärkungselement kann das radial weiter außen liegende Verstärkungselement sein.

Alternativ weisen die Verstärkungselemente gemäß einer zweiten Option der vorliegenden Erfindung eine oder mehrere Drahtlagen auf oder sind aus Drahtlagen hergestellt. Die Drahtlagen können als Drahtlagengeflecht ausgeführt sein.

In gewissen erfindungsgemäßen Ausführungsformen ist wenigstens ein zweites Verstärkungselement flächig mit dem ersten Verstärkungselement und flächig mit der radial inneren und/oder äußeren Oberfläche des Gehäuseabschnitts verbunden. Beispielsweise können beide Verstärkungselemente teilweise (z. B. in Abschnitten) mit der oder den Oberflächen (radial innere und/oder äußere Oberfläche) des Gehäuseabschnitts (z. B. wiederum in Abschnitten) flächig miteinander verbunden sein.

In einigen erfindungsgemäßen Ausführungsformen sind manche oder alle Verstärkungselemente streifenförmig, bandförmig, ringförmig oder teilweise ringförmig, oder lamellenförmig ausgeführt.

Die Verstärkungselemente sind in gewissen Ausführungsformen als Schalen oder schalenförmig ausgestaltet.

In manchen erfindungsgemäßen Ausführungsformen sind die Verstärkungselemente reversibel oder nicht reversibel biegbar, elastisch, steif, starr, beschichtet oder nicht beschichtet.

In bestimmten erfindungsgemäßen Ausführungsformen sind die Verstärkungselemente aus einem metallischen Werkstoff, aus einem Kunststoff oder aus einem Verbundmaterial hergestellt oder weisen einen solchen (Verbund-) Wertstoff auf.

In manchen erfindungsgemäßen Ausführungsformen berühren die wenigstens zwei Verstärkungselemente ganz oder teilweise flächig die radial innere und/oder äußere Oberfläche des Gehäuseabschnitts. Die Verstärkungselemente können beispielsweise ausschließlich innen oder ausschließlich außen mit dem Gehäuseabschnitts verbunden sein. Manche oder alle Verstärkungselemente können weiterhin zum Teil innen und zum Teil außen mit dem Gehäuseabschnitt verbunden sein. Beispielsweise kann ein oder können mehrere Verstärkungselemente außen angeordnet sein, ferner ein oder mehrere Verstärkungselemente innen. Manche oder alle Verstärkungselemente können schalenförmig oder schichtförmig flächig mit der Oberfläche des Gehäuseabschnitts verbunden sein.

In einigen erfindungsgemäßen Ausführungsformen sind manche oder alle Verstärkungselemente ringförmig ausgebildet. Bezugsachse ist die Drehachse der Gasturbine. Die Querschnittsfläche der ringförmigen Ausbildung in Umfangsrichtung kann rechteckig, quadratisch, oval oder rund oder eine andere Form aufweisen.

In manchen erfindungsgemäßen Ausführungsformen kann der Radius (mittlerer Radius bezogen auf die Mittellinie des Querschnitts in Umfangsrichtung) von ringförmigen Verstärkungselementen in Achsrichtung (Bezugsachse) konstant sein, oder sich verändern. Beispielsweise können Verstärkungselemente verschiedene Profile aufweisen, etwa um sich an die innere und/oder äußere Oberfläche des Gehäuseabschnitts anzupassen.

In bestimmten erfindungsgemäßen Ausführungsformen weist die Niederdruckturbine im Niederdruckturbinen-Abschnitt einen Wert des charakteristischen Parameters AN² von größer als 8000 (m/s)² auf. Dieser Wert kann näherungsweise in den Einheiten "inch" und "minutes" mit 4,45 (inch/min)² angegeben werden. Der charakteristische Parameter AN² (synonym zu A*N²) ist das Produkt aus der Gaskanalquerschnittsfläche A in der Gasturbine und dem Quadrat der maximal zulässigen Drehzahl der Gasturbine N. Der charakteristische Parameter AN² wird insbesondere an der letzten Stufe (in Strömungsrichtung) der Niederdruckturbine gemessen. Der charakteristische Parameter AN² kann als Maß für die Fliehkraftbelastung einer Schaufel betrachtet werden.

In einigen erfindungsgemäßen Ausführungsformen weisen die Verstärkungselemente ein gewickeltes Band auf oder sind aus einem gewickelten Band hergestellt. Das Band kann mehrlagig (in Radialrichtung) gewickelt sein.

Ein gewickeltes Band ist in manchen erfindungsgemäßen Ausführungsformen ein Band, welches mehrere Lagen übereinander, in flächiger Berührung zueinander, aufweist, wobei die Lagen zu ein und demselben Band gehören. Das Band wird zum Erzielen einzelner Lagen gebogen oder gefaltet. Das Band kann auch mehrere Bänder aufweisen, die gemeinsam aufgewickelt werden.

In bestimmten erfindungsgemäßen Ausführungsformen ist das gewickelte Band ein Metallband und/oder ein Gewebeband. Beispielsweise können ein Metallband und ein Gewebeband flächig aufeinander gelegt und anschließend gewickelt werden.

Erfindungsgemäß sind die Verstärkungselemente relativ zueinander in radialer Richtung aufeinander geschichtet angeordnet. Die Verstärkungselemente können vollständig oder teilweise aufeinander geschichtet angeordnet sein, das heißt, die Verstärkungselemente bedecken sich gegenseitig vollständig oder nur teilweise.

In einigen erfindungsgemäßen Ausführungsformen sind die Verstärkungselemente miteinander und/oder mit dem Gehäuseabschnitt mittels Formschluss fixiert. Insbesondere in axialer Richtung können die Verstärkungselemente durch Formschluss zueinander fixiert werden. Die derart zueinander fixierten Verstärkungselemente oder einzelne Verstärkungselemente können mit dem Gehäuseabschnitt gleichfalls in axialer Richtung fixiert sein.

In bestimmten erfindungsgemäßen Ausführungsformen werden Drahtlagen als Verstärkungselemente mittels freier Enden von Einzeldrähten der Drahtlagen zur Fixierung zueinander oder zur Fixierung mit dem Gehäuseabschnitt verwendet. Derartige Fixierungen können beispielsweise zur axialen Befestigung genutzt werden.

In manchen erfindungsgemäßen Ausführungsformen sind die Verstärkungselemente miteinander und/oder mit dem Gehäuseabschnitt mittels Punkt- und/oder Heftschweißung fixiert. Insbesondere zur axialen Fixierung können die Verstärkungselemente zueinander, einzeln mit dem Gehäuseabschnitt oder die zunächst zueinander fixierten Verstärkungselemente mit dem Gehäuseabschnitt fixiert sein.

In bestimmten erfindungsgemäßen Ausführungsformen ist eine oder sind mehrere Turbinengehäusekomponenten mittels der Verstärkungselemente mit dem Turbinengehäuse verbindbar oder verbunden ausgestaltet. Die Turbinengehäusekomponenten können direkt mittels der Verstärkungselemente mit dem Turbinengehäuse befestigt werden. Derartige Turbinengehäusekomponenten können beispielsweise Halterungen für Einlaufbeläge sein, die zur Befestigung am Gehäuse vorgesehen sind, Flansche für weitere Turbinengehäusekomponenten oder ähnliches.

Manche oder alle erfindungsgemäßen Ausführungsformen können einen, mehrere oder alle der oben und/oder im Folgenden genannten Vorteile aufweisen.

Durch den Einsatz erfindungsgemäßer Verstärkungselemente in dem erfindungsgemäßen Turbinengehäuse kann die Containment-Forderung vorteilhaft einfacher realisiert werden als mit anderen konstruktiven, alternativen Ausführungsformen. Dies basiert auf der folgenden Betrachtung des sich ändernden Schadensmechanismus bei zunehmender Energie eines potentiellen Bruchstücks bei einem mechanischen (im Sinn von trennend) Bruch oder Teilabriss einer Laufschaufel. Bei Containmentwänden von Turbinen ändert sich, aufgrund der Bauteilsteifigkeit mit zunehmender Energie des potentiellen Schaufelbruchstücks und damit einer erhöhten Wanddickenanforderung des Containments, der Schadensmechanismus von Ausbeulen (plastischer Verformung) und anschließendem Aufreißen unter überwiegender Zugbelastung bei geringeren Energien und dünnen Wanddicken zu einer Scherbeanspruchung bei höheren Energien und dicken Wänden. Durch diesen Wechsel in der Belastung wird mit zunehmender Wanddicke des Containments die Contaimentfähigkeit geringer.

Durch den Einsatz erfindungsgemäßer Verstärkungselemente in dem erfindungsgemäßen Turbinengehäuse kann die Containment-Forderung dadurch vorteilhaft einfacher realisiert werden, dass die Scherbeanspruchung bei den oben beschriebenen Schadensmechanismen mittels der erfindungsgemäßen Verstärkungselemente, die in flächiger Berührung mit der radial inneren und/oder äußeren Oberfläche des Gehäuseabschnitts verbunden sind, besser aufgefangen bzw. adsorbiert werden kann als die bisher üblichen Containment-Anordnungen nach dem Stand der Technik.

Das mindestens eine Verstärkungselement, das in bestimmten Ausführungsformen auch als Schale bezeichnet wird, kann vorzugsweise ohne oder in nur geringem Abstand zur Gehäusewand fixiert oder montiert sein, um im Containment-Fall (das heißt, wenn beispielsweise ein Bruchstück einer Laufschaufel radial in das Containment geschleudert wird) eine gegenseitige Abstützung gegen Scherkräfte zu erreichen und im weiteren Verlauf des Auffangvorgangs des Bruchstücks im Containment Reibungseffekte zwischen den Verstärkungselementen zum Energieabbau vorteilhaft zu nutzen.

Bei Verwendung des erfindungsgemäßen Turbinengehäuses und der erfindungsgemäßen Verbindungselemente kann die Containment-Anforderung vorteilhaft auf mehrere Bereiche (Verstärkungselemente, weitere Schalen, Gehäusewand etc.) aufgeteilt werden. Durch die Aufteilung der Containment-Anforderung auf mehrere Schalen tritt im Schadensfall (Containment-Fall) zunächst vorteilhaft eine überwiegende Zugbelastung der Schalen auf (plastische Verformung). Bei einer weiteren Belastung kann die Belastungsgrenze des Materials der Schalen überschritten werden, so dass in einer oder mehreren Schalen Risse auftreten, bis hin zum vollständigen Aufreißen der Schalen. Mittels der erfindungsgemäßen Anordnung, bei der die Verstärkungselemente in flächiger Berührung mit der radial inneren und/oder äußeren Oberfläche des Gehäuseabschnitts verbunden sind, werden Risse beispielsweise an der Innenschale vorteilhaft an der Schalengrenze gestoppt, sodass die Spannungsüberhöhung durch einen Riss möglicherweise nicht zu einem schnellen Versagen der ganzen Wand führt. In der Summe führen diese Effekte dazu, dass die addierte Wanddicke und damit das Gewicht vorteilhaft reduziert werden.

Die vorliegende Erfindung wird im Folgenden anhand der beigefügten Zeichnungen, in welcher identische Bezugszeichen gleiche oder ähnliche Bauteile bezeichnen, exemplarisch erläutert. In den jeweils schematisch vereinfachten Figuren gilt:
- **Fig. 1**: zeigt eine Schnittdarstellung eines Ausschnitts eines erfindungsgemäßen Turbinengehäuses mit Verstärkungselementen;
- **Fig. 2**: zeigt eine Schnittdarstellung eines Ausschnitts eines weiteren erfindungsgemäßen Turbinengehäuses mit Verstärkungselementen an der Aussenseite eines Gehäuseabschnitts;
- **Fig. 3**: zeigt eine Schnittdarstellung eines Ausschnitts eines wiederum weiteren erfindungsgemäßen Turbinengehäuses mit Verstärkungselementen an zwei Gehäuseabschnitten; und
- **Fig. 4**: zeigt eine Schnittdarstellung eines Ausschnitts eines weiteren erfindungsgemäßen Turbinengehäuses mit einem gewickelten Band als Verstärkungselement.

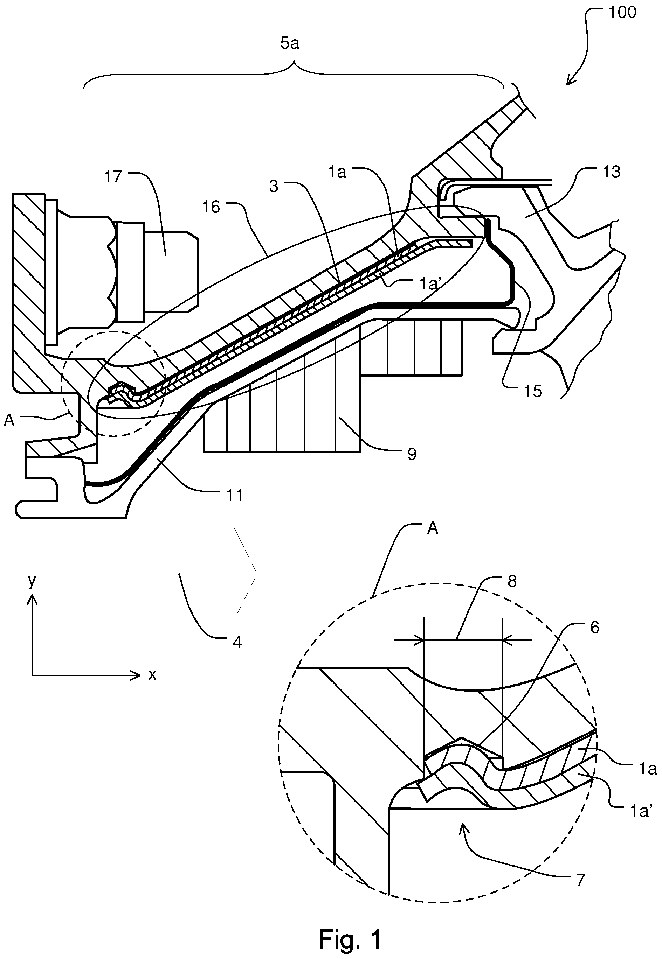

**Fig. 1** zeigt schematisch vereinfacht eine Schnittdarstellung eines Ausschnitts eines erfindungsgemäßen Turbinengehäuses 100 mit einem ersten Verstärkungselement 1 a und einem zweiten Verstärkungselement 1a'. Das erste Verstärkungselement 1a ist an einer Innenseite 3 eines Niederdruckturbinen-Gehäuseabschnitts 5a (abgekürzt: NDT-Gehäuseabschnitt 5a) angeordnet. Das zweite Verstärkungselement 1a' ist flächig an dem ersten Verstärkungselement 1a angeordnet.

Der NDT-Gehäuseabschnitt 5a weist einen Contaimnent-Abschnitt 16 auf. Die beiden Verstärkungselemente 1a und 1a' und der Teil des NDT-Gehäuseabschnitts 5a, der mit dem ersten Verstärkungselement 1a verbunden ist, sind innerhalb eines Containment-Abschnitts 16 angeordnet.

Die Gasturbine wird in x-Richtung durchströmt. Dies ist mittels dem Pfeil der Durchströmungsrichtung 4 dargestellt.

Die beiden Verstärkungselemente 1a und 1a' sind einerseits flächig übereinander angeordnet, andererseits ist das erste Verstärkungselement 1a flächig an der Innenseite 3 des NDT-Gehäuseabschnitts 5a fixiert. Die Verstärkungselemente 1a, 1a' sind in dieser exemplarischen Ausführungsform ringförmig um die Drehachse der Turbine (x-Richtung) angeordnet, so dass die im Schnitt dargestellten Verstärkungselemente 1a, 1a' sich um den gesamten Umfang des Turbinengehäuses auf der Innenseite 3 erstrecken.

Die Verstärkungselemente 1a, 1a' sowie der Teil des Gehäuseabschnitts 5a, welcher mit dem zweiten Verstärkungselement 1a' flächig verbunden ist, können als Schalen, Schalenelemente oder als schalenförmig bezeichnet werden.

In dem hier gezeigten Beispiel sind die Verstärkungselemente 1a, 1a' rotationssymmetrisch um die Drehachse der Turbine ausgebildet.

Alternativ (hier nicht gezeigt) kann das zweite Verstärkungselement 1a' an der Aussenseite des NDT-Gehäuseabschnitts 5a angeordnet sein.

Die Ausschnittsvergrößerung A zeigt eine als Sackloch dargestellte Bohrung 6 in radialer Richtung y, mit einem Bohrungsdurchmesser 8. Mittels dieser Bohrung 6 werden die beiden Verstärkungselemente 1a, 1a' in axialer x-Richtung fixiert. Die Verstärkungselemente 1a, 1a' sind an derjenigen Stelle gekrümmt ausgeführt, die in die Bohrung 6 hineinragt. Dieser Endbereich 7 kann beispielsweise im Einbauzustand der Verstärkungselemente 1a, 1a' im Gehäuseabschnitt 5a durch eine plastische Verformung erreicht werden. Mittels dieser axialen Fixierung kann ein (axiales) Verschieben der Verstärkungselemente 1a, 1a' verhindert werden.

Eine rotationssymmetrische Einlaufbelaganordnung 9 ist an einem weiteren, gegenüber dem NDT-Gehäuseabschnitt 5a radial weiter innen (d. h. weiter in negativer y-Richtung) angeordneten Gehäuseteil 11 fixiert. Dieses Gehäuseteil 11 wird mit einem axial benachbarten weiteren Gehäuseteil 13 und einem Fixierungselement 15 in radialer und axialer Richtung fixiert. Das Gehäuseteil 11, das axial benachbarte weitere Gehäuseteil 13 sowie das Fixierungselement 15 sind in der Schnittdarstellung nicht schraffiert, also nicht geschnitten, gezeigt, können jedoch ebenfalls ringförmig oder schalenförmig ausgebildet sein.

Der NDT-Gehäuseabschnitt 5a kann mittels einer Verschraubung 17 flanschartig mit weiteren Gehäuseteilen (hier nicht dargestellt) verbunden werden.

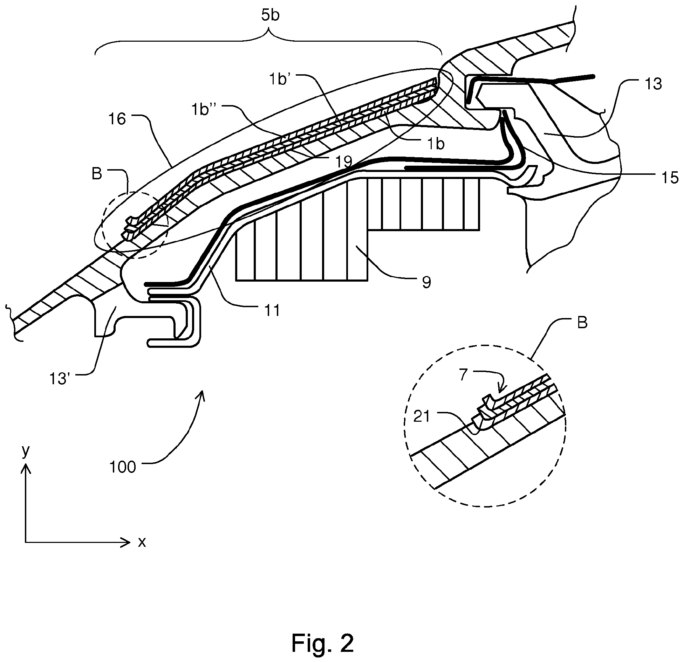

**Fig. 2** zeigt schematisch vereinfacht eine Schnittdarstellung eines Ausschnitts eines weiteren erfindungsgemäßen Turbinengehäuse, 100 mit einem ersten Verstärkungselement 1b, einem zweiten Verstärkungselement 1b' und einem dritten Verstärkungselement 1b", welche an der Außenseite 19 eines NDT-Gehäuseabschnitts 5b angeordnet sind.

Alternativ (hier nicht dargestellt) können auch weitere Verstärkungselemente an der Innenseite oder an der Außenseite 19 des NDT-Gehäuseabschnitts 5b angeordnet sein.

Die drei Verstärkungselemente 1b, 1b', 1b" sind flächig übereinander angeordnet. Das erste Verstärkungselement 1b ist flächig an der Außenseite 19 des NDT-Gehäuseabschnitts 5b fixiert.

Die axiale Fixierung der Verstärkungselemente 1b wird gegen Verschieben entgegen der Achsrichtung x durch abgerundete, gekrümmte Enden 7 der Verstärkungselemente 1b, 1b', 1b" (in Fig. 2 am linken Ende der Verstärkungselemente 1b, 1b', 1b") realisiert oder unterstützt. Dies wird in der Ausschnittsvergrößerung B verdeutlicht. Die gekrümmten Enden 7 stoßen im Beispiel der Fig. 2 an einen Absatz 21 der Oberflächengeometrie des NDT-Gehäuseabschnitts 5b formschlüssig an. Die axiale Fixierung der Verstärkungselemente 1b, 1b', 1b" wird gegen Verschieben in Achsrichtung x unmittelbar durch die Geometrie des NDT-Gehäuseabschnitts 5b realisiert (in Fig. 2 am rechten Ende der Verstärkungselemente 1b, 1b', 1b") oder durch diese unterstützt.

Eine rotationssymmetrische Einlaufbelaganordnung 9 ist an einem weiteren, gegenüber dem NDT-Gehäuseabschnitt 5b radial weiter innen angeordneten Gehäuseteil 11 fixiert. Das Gehäuseteil 11 wird mittels eines axial benachbarten, weiteren Gehäuseteils 13 auf der einen Seite sowie mittels eines auf der axial gesehen gegenüberliegenden Seite gelegenen weiteren Gehäuseteils 13' und eines Fixierungselements 15 in radialer und axialer Richtung fixiert.

Die Verstärkungselemente 1b, 1b', 1b" sowie der Bereich des NDT-Gehäuseabschnitts 5b, der mit dem ersten Verstärkungselemente 1b verbunden ist, sind Teile oder Abschnitte des Containments oder des Containment-Bereichs 16.

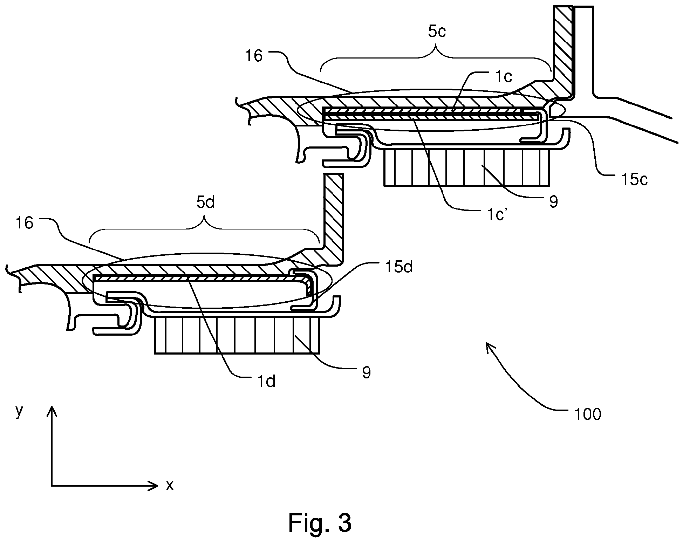

**Fig. 3** zeigt schematisch vereinfacht eine Schnittdarstellung eines Ausschnitts eines weiteren erfindungsgemäßen Turbinengehäuses 100 mit einem ersten Verstärkungselement 1c und einem zweiten Verstärkungselement 1c' an einem NDT-Gehäuseabschnitt 5c, sowie einem weiteren ersten Verstärkungselement 1d an einem weiteren NDT-Gehäuseabschnitt 5d.

Die Verstärkungselemente 1c, 1c' sowie das Verstärkungselement 1d sind innerhalb der Containment-Abschnitte 16 angeordnet.

Der weitere NDT-Gehäuseabschnitt 5d weist nur ein erstes Verstärkungselement 1d auf. Der weitere NDT-Gehäuseabschnitt 5d weist zwei Schalen oder schalenförmige Elemente auf, wobei die erste Schale derjenige Teil des NDT-Gehäuseabschnitts 5d ist, der flächig mit dem Verstärkungselement 1d verbunden ist, und wobei die zweite Schale das Verstärkungselement 1d ist.

Die Verstärkungselemente 1c, 1c' und 1d unterscheiden sich in der Form der, in Bezug auf die Ansicht in Fig. 3, rechten Endbereiche.

Die beiden Verstärkungselemente 1c, 1c' sind zweischichtig oder zweilagig ausgeführt, mit flächiger Berührung zueinander. Das obere der beiden Verstärkungselemente 1c ist stirnseitig gegen ein Fixierungselement 15c gegen axiale Verschiebung in Achsrichtung (x-Richtung) gesichert, das untere grenzt an den Krümmungsradius des Fixierungselements 15d an.

Das Verstärkungselement 1d ist einschichtig oder einlagig ausgeführt. Das Verstärkungselement 1d ist gekrümmt oder gebogen am, in Achsrichtung (x-Richtung), rechten Ende hergestellt und mittels des Fixierungselements 15d gegen axiale Verschiebung in Achsrichtung (x-Richtung) gesichert.

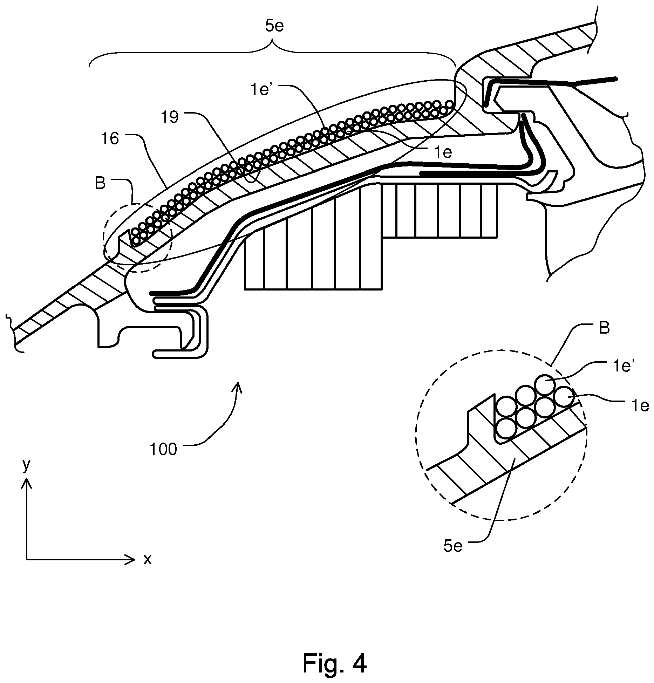

**Fig. 4** zeigt schematisch vereinfacht eine Schnittdarstellung eines Ausschnitts eines weiteren erfindungsgemäßen Turbinengehäuses 100 mit wenigstens einem gewickelten Band als erstem Verstärkungselement 1e und zweitem Verstärkungselement 1e'. Das erste Verstärkungselement 1e ist unmittelbar an der Außenseite 19 des NDT-Gehäuseabschnitts 5e angeordnet.

Die Verstärkungselemente 1e, 1e' weisen beispielsweise einen gewickelten Draht oder ein gewickeltes Verbundmaterial auf, welches in Umfangsrichtung des NDT-Gehäuseabschnitts 5e gewickelt ist.

Die axiale Fixierung der Verstärkungselemente 1e, 1e' wird in analoger Weise zur axialen Fixierung in Fig. 2 realisiert (siehe Ausschnittsvergrößerung C). Die geometrischen Formen, insbesondere die Oberflächengeometrie 19 des NDT-Gehäuseabschnitts 5e, sind jedoch im Vergleich zur Oberflächengeometrie 19 des NDT-Gehäuseabschnitts 5b in Fig. 2 anders ausgestaltet. Alternativ können auch die freien Enden des Wickelmaterials (Draht, Verbundmaterial etc.) der Verstärkungselemente 1e, 1e' für eine geeignete Fixierung verwendet werden.

Die Verstärkungselemente 1e, 1e' können durch eine einzige Wicklung aufgebracht werden.

**Bezugszeichenliste**

| **Bezugszeichen** | **Beschreibung** |
|---|---|
| 100 | Turbinengehäuse |
| x | Axialrichtung, Hauptdurchströmungsrichtung |
| y | Radialrichtung |
| 1a,1b,1c, 1d,1e | erstes Verstärkungselement |
| 1a',1b' 1c',1e' | zweites Verstärkungselement |
| 1b" | drittes Verstärkungselement |
| 3 | Innenseite eines NDT-Gehäuseabschnitts |
| 4 | Durchströmungsrichtung |
| 5a,5b,5c,5d,5e | NDT-Gehäuseabschnitt |
| 6 | Bohrung |
| 7 | Endbereich; gekrümmte Enden der Verstärkungselemente 1a und 1a' |
| 8 | Bohrungsdurchmesser |
| 9 | Einlaufbelaganordnung |
| 11 | Gehäuseteil |
| 13,13' | weiteres Gehäuseteil |
| 15 | Fixierungselement |
| 16 | Containment-Abschnitt |
| 17 | Verschraubung |
| 19 | Aussenseite eines NDT-Gehäuseabschnitts |
| 21 | Absatz der Oberflächengeometrie des NDT-Gehäuseabschnitts |

## Patentansprüche

1. Turbinengehäuse (100) für eine Gasturbine, mit einem Gehäuseabschnitt (5a, 5b, 5c, 5e), wobei der Gehäuseabschnitt (5a, 5b, 5c, 5e) einen Containment-Abschnitt (16) zum Zurückhalten von radial herausdringenden Schaufelteilen aufweist, wobei der Gehäuseabschnitt (5a, 5b, 5c, 5e) ein erstes Verstärkungselement (1a, 1b, 1c, 1e) und ein zweites Verstärkungselement (1a', 1b', 1c', 1e') aufweist, wobei das erste Verstärkungselement (1a, 1b, 1c, 1e) in flächiger Berührung mit der radial inneren und/oder äußeren Oberfläche des Gehäuseabschnitts (5a, 5b, 5c, 5e) verbunden ist,
**dadurch gekennzeichnet, dass**
die beiden Verstärkungselemente (1a, 1e', 1b, 1b', 1c, 1c', 1e, 1e') schalenförmig ausgestaltet sind sowie flächig übereinander und relativ zueinander in radialer Richtung aufeinander oder einander wenigstens teilweise überlappend geschichtet angeordnet sind, wobei entweder das zweite Verstärkungselement (1a', 1b', 1c') flächig mit dem ersten Verstärkungselement (1a, 1b, 1c) verbunden ist, oder wobei wenigstens eines der Verstärkungselemente (1e, 1e') eine oder mehrere Drahtlagen aufweist oder aus Drahtlagen hergestellt ist.

2. Turbinengehäuse (100) nach Anspruch 1, wobei ein drittes Verstärkungselement (1b") flächig mit dem zweiten Verstärkungselement (1a', 1b, 1c', 1e') verbunden ist.

3. Turbinengehäuse (100) nach Anspruch 2, wobei der Gehäuseabschnitt (5a, 5b, 5c, 5e) wenigstens ein weiteres Verstärkungselement aufweist.

4. Turbinengehäuse (100) nach einem der vorangegangenen Ansprüche, wobei der Gehäuseabschnitt (5a, 5b, 5c, 5d, 5e) ein Niederdruekturbineu-Gehäuseabschnitt ist.

5. Turbinengehäuse (100) nach einem der vorangegangenen Ansprüche, wobei wenigstens eines der Verstärkungselemente (1a, 1a', 1b, 1b', 1b", 1c, 1c', 1e, 1e') ringförmig in Umfangsrichtung des Gehäuseabschnitts ausgebildet ist.

6. Turbinengehäuse (100) nach einem der vorangegangenen Ansprüche, wobei die Gasturbine einen Wert des charakteristischen Parameters AN² von größer als 8000 (m/s)², bezogen auf den Querschnitt in Durchströmungsrichtung (4) des Gehäuseabschnitts (5a, 5b, 5c, 5e), aufweist.

7. Turbinengehäuse (100) nach einem der vorangegangenen Ansprüche, wobei eines der Verstärkungselemente (1a, 1a', 1b, 1b', 1b", 1c, 1c', 1e, 1e') ein gewickeltes Band aufweist oder aus einem gewickelten Band hergestellt ist.

8. Turbinengehäuse (100) nach Anspruch 7, wobei das gewickelte Band ein Metallband und/oder ein Gewebeband ist oder aufweist.

9. Turbinengehäuse (100) nach einem der vorangegangenen Ansprüche, wobei sich wenigstens zwei der Verstärkungselemente (1a, 1a', 1b, 1b', 1b", 1c, 1c', 1e, 1e') berühren.

10. Turbinengehäuse (100) nach einem der vorangegangenen Ansprüche, wobei die Verstärkungselemente (1a, 1a', 1b, 1b', 1b", 1c, 1c', 1e, 1e') miteinander und/oder mit dem Gehäuseabschnitt (5a, 5b, 5c, 5e) mittels Formschluss fixiert sind.

11. Turbinengehäuse (100) nach einem der vorangegangenen Ansprüche, wobei die Verstärkungselemente (1a, 1a', 1b, 1b', 1b", 1c, 1c', 1e, 1e') miteinander und/oder mit dem Gehäuseabschnitt (5a, 5b, 5c, 5e) mittels Punkt- und/oder Heftschweißung fixiert sind.

12. Turbinengehäuse (100) nach einem der vorangegangenen Ansprüche, wobei eine oder mehrere von weiteren Gasturbinenkomponenten mittels der Verstärkungselemente (1a, 1a', 1b, 1b', 1b", 1c, 1c', 1e, 1e') mit dem Turbinengehäuse (100) verbindbar ausgestaltet sind.

## Claims

1. A turbine housing (100) for a gas turbine, comprising a housing section (5a, 5b, 5c, 5e), wherein the housing section (5a, 5b, 5c, 5e) has a containment section (16) for retaining blade fragments expelled radially outwards, wherein the housing section (5a, 5b, 5c, 5e) has a first reinforcing element (1a, 1 b, 1c, 1 e) and a second reinforcing element (1a', 1b', 1 c', 1e'), wherein the first reinforcing element (1a, 1b, 1c, 1e) is joined in flat contact with a radially inner and/or outer surface of the housing section (5a, 5b. 5c, 5e),
**characterized in that**
the two first and second reinforcing elements (1a, 1a', 1b, 1b', 1 c, 1c', 1e, 1 e') are configured in a dish shape and are stacked flat one above the other and on one another or in relation to one another or at least partially overlapping, in a radical direction, wherein either the second reinforcing element (1a', 1b', 1c') is joined in flat contact with the first reinforcing element (1a, 1b, 1c), or wherein at least one of the reinforcing element (1e, 1e') has one or more wire layers or is produced from wire layers.

2. The turbine housing (100) according to claim 1, wherein a third reinforcing element (1b") is joined in flat contact with the second reinforcing element (1a', 1b', 1c', 1e').

3. The turbine housing (100) according to claim 2, wherein the housing section (5a, 5b, 5c, 5e) has at feast one further reinforcing element.

4. The turbine housing (100) according to one of the preceding claims, wherein the housing section (5a, 5b, 5c, 5d, 5e) is a low-pressure turbine housing section.

5. The turbine housing (100) according to one of the preceding claims, wherein the at least one of the reinforcing elements (1a, 1a', 1b, 1b', 1b", 1c, 1c', 1e, 1e') is configured annularly in the circumferential direction of the housing section.

6. The turbine housing (100) according to one of the preceding claims, wherein the gas turbine has a value of the characteristic parameter AN² of greater than 8000 (m/s)² with respect to the cross section in the flow direction (4) of the housing section (5a, 5b, 5c, 5e).

7. The turbine housing (100) according to one of the preceding claims, wherein one of the reinforcing elements (1a, 1a', 1b, 1b', 1b", 1c, 1c', 1e, 1e') has a wound band or is produced from a wound band.

8. The turbine housing (100) according to claim 7, wherein the wound band is or has a metal band and/or a fabric band.

9. The turbine housing (100) according to one of the preceding claims, wherein at least two of the reinforcing elements (1a, 1a', 1b, 1b', 1b", 1c, 1c', 1e, 1e') are in contact with one another.

10. The turbine housing (100) according to one of the preceding claims, wherein the reinforcing elements (1a, 1a', 1b, 1b', 1b", 1c, 1c', 1e, 1e') are fixed to one another and/or to the housing section (5a, 5b, 5c, 5e) by means of positive locking.

11. The turbine housing (100) according to one of the preceding claims, herein the reinforcing elements (1a, 1a', 1b, 1b', 1b", 1c, 1c', 1e, 1e') are fixed to one another and/or to the housing section (5a, 5b, 5c, 5e) by spot welding and/or tack welding,

12. The turbine housing (100) according to one of the preceding claims, wherein one or more further gas turbine components are configured to be joinable with the turbine housing (100) by means of the reinforcing elements (1a, 1 a', 1b, 1b', 1b", 1c, 1c', 1e, 1e').

## Revendications

1. Carter de turbine (100) pour une turbine à gaz, avec une section de carter (5a, 5b, 5c, 5e), dans lequel la section de carter (5a, 5b, 5c, 5e) présente une section de confinement (16) pour retenir des parties de pales qui en ressortent radicalement, dans lequel la section de carter (5a, 5b, 5c, 5e) présente un premier élément de renfort (1a, 1b, 1c, 1e) et un deuxième élément de renfort (1a', 1b', 1c', 1e'), dans lequel le premier élément de renfort (1a, 1b, 1c, 1e) est relié en contant à plat avec la surface radialement interne et/ou externe de la section de carter (5a, 5b, 5c, 5e),
**caractérisé en ce que** :
les deux éléments de renfort (1a, 1a', 1b, 1b', 1c, 1c', 1e, 1e') sont conçus en forme de cuvette ainsi qu'agencés à plat l'un au-dessus de l'autre et dans la direction radiale l'un par rapport à l'autre ou superposés en se chevauchant au moins en partie l'un l'autre, dans lequel le deuxième élément de renfort (1a', 1b', 1c') est relié à plat au premier élément de renfort (1a, 1b, 1c) ou dans lequel au moins l'un des éléments de renfort (1e, 1e') présente une ou plusieurs couches de Fils ou est constitué de couches de fils.

2. Carter de turbine (100) selon la revendication 1, dans lequel un troisième élément de renfort (1b") est relié à plat au deuxième élément de renfort (1a', 1b', 1c', 1e').

3. Carter de turbine (100) selon la revendication 2, dans lequel la section de carter (5a, 5b, 5c, 5e) présente au moins un autre élément de renfort.

4. Carter de turbine (100) selon l'une quelconque des revendications précédentes, dans lequel la section de carter (5a, 5b, 5c, 5d, 5e) est une section de carter de turbine basse pression.

5. Carter de turbine (100) selon l'une quelconque des revendications précédentes, dans lequel au moins l'un des éléments de renfort (1a, 1a', 1b, 1b', 1b", 1c, 1c', 1e, 1e') est conçu sous forme annulaire dans la direction circonférentielle de la section de carter.

6. Carter de turbine (100) selon l'une quelconque des revendications précédentes, dans lequel la turbine à gaz présente une valeur du paramètre caractéristique AN^{z} de plus de 8 000 (m/s)² par rapport à la section transversale dans le sens travers (4) de la section de carter (5a, 5b, 5c, 5e).

7. Carter de turbine (100) selon l'une quelconque des revendications précédentes, dans lequel l'un des éléments de renfort (1a, 1a', 1b, 1b', 1b", 1c, 1c', 1e, 1e') présente une bande enroulée ou est constitué d'une bande enroulée.

8. Carter de turbine (100) selon la revendication 7, dans lequel la bande enroulée est une bande métallique et/ou est ou présente une bande de tissu.

9. Carter de turbine (100) selon l'une quelconque des revendications précédentes, dans lequel au moins deux des éléments de renfort (1a, 1a', 1b, 1b', 1b", 1c, 1c', 1e, 1e') se touchent.

10. Carter de turbine (100) selon l'une quelconque des revendications précédentes, dans lequel les éléments de renfort (1a, 1a', 1b, 1b', 1b", 1c, 1c', 1e, 1e') sont fixés l'un à l'autre et/ou à la section de carter (5a, 5b, 5c, 5e) par adaptation de formes.

11. Carter de turbine (100) selon l'une quelconque des revendications précédentes, dans lequel les éléments de renfort (1a, 1a', 1b, 1b', 1b", 1c, 1c', 1e, 1e') sont fixés l'un à l'autre et/ou à la section de carter (5a, 5b, 5c, 5e) par soudage par points et/ou par pointage.

12. Carter de turbine (100) selon l'une quelconque des revendications précédentes, dans lequel un ou plusieurs d'autres composants de turbine à gaz est ou sont conçus de manière à se raccorder au carter de turbine (100) au moyen des éléments de renfort (1a, 1a', 1b, 1b', 1b", 1c, 1c', 1e, 1e'),
